# EUROPEAN PATENT APPLICATION

(11) **EP 4 491 435 A1**
(43) Date of publication of application: **15.01.2025**
(21) Application number: 23185074.4
(22) Date of filing: 12.07.2023
(51) Int. Cl.: B60L 3/00, B60W 50/02, B60L 3/04

(54) **METHOD AND MODULE FOR IDENTIFYING A NEED OF A TOW-MODE ACTIVATION IN AN ELECTRIC VEHICLE, BATTERY ELECTRIC VEHICLE**

(71) Applicant: Volvo Car Corporation, 405 31 Göteborg (SE)
(72) Inventor: SUBASIC, Haris, 40531 Göteborg (SE)
(74) Representative: Maiwald GmbH

(57) **Abstract**

The disclosure relates to a method for identifying a need of a tow-mode activation in an electric vehicle, the tow-mode being a state of the electric vehicle in which the electric vehicle is suitable for being towed. The method comprises obtaining a first data indicative of a malfunction of the electric vehicle, determining whether the first data corresponds to a second data indicative of a malfunction requiring tow-mode activation, and providing a signal indicative of the need of the tow-mode activation, when the first data corresponds to the second data. The disclosure also relates to a module for identifying a need of a tow-mode activation in an electric vehicle and a battery electric vehicle comprising a battery, an electric motor, a drivetrain and a module for identifying a need of a tow-mode activation.

## Description

### TECHNICAL FIELD

The present disclosure relates to a method for identifying a need of a tow-mode activation in an electric vehicle, a module for identifying a need of a tow-mode activation in an electric vehicle, and a battery electric vehicle comprising a battery, an electric motor, a drivetrain and a module for identifying a need of a tow-mode activation.

### BACKGROUND ART

There are more and more safety features added to vehicles every day. One of those features is, so called "autopark", which prevents the user to leave a vehicle in a neutral state. Neutral state, referring to a state in which a neutral gear is selected, is a rather traditional term, which is mostly used for vehicles with conventional transmission systems. In electric vehicles, the neutral state imply that no torque request is sent to the wheels/electric motors, and that an inverter is kept in standby. In the field, this may be also referred to as "free-roll state". The autopark function may be a problem when the vehicle needs to be towed. To tow a vehicle, original equipment manufacturers (OEMs), introduce functions like "tow-mode", which disables autopark and allow the user to leave the vehicle in a neutral state for providing a secure towing. However, the user might not be aware of such a function, or that the function is needed to prevent damaging the driveline while towing. Furthermore, in some vehicles a manual activation of tow-mode may not be possible, for instance when a human machine interface (HMI) is not provided in the vehicle.

Hence, there may be a need for improved ways of towing vehicles.

### SUMMARY

The problem is at least partially solved or alleviated by the subject matter of the independent claims of the present disclosure, wherein further examples are incorporated in the dependent claims.

According to a first aspect, there is provided a method for identifying a need of a tow-mode activation in an electric vehicle. The tow-mode is a state of the electric vehicle in which the electric vehicle is suitable for being towed. The method comprises obtaining a first data indicative of a malfunction of the electric vehicle, determining whether the first data corresponds to a second data indicative of a malfunction requiring tow-mode activation, and providing a signal indicative of the need of the tow-mode activation, when the first data corresponds to the second data.

The method for identifying a need of a tow-mode activation in an electric vehicle may identify the need of a tow-mode automatically. In other words, a user of the electric vehicle may not need to request identification if activation of the tow-mode is required. The tow-mode may be required to be activated because of a failure of a part of the electric vehicle, which may prevent the electric vehicle from proceeding the drive or if the drive proceeds, may lead to an accident. Tow-mode may, accordingly, define a state of the electric vehicle which has taken any measure to prevent the drivetrain of the electric vehicle from being affected while the electric vehicle is being towed. Particularly, parts of the drivetrain which have a direct connection to at least one wheel that moves during towing may need to be disconnected from the wheel. Accordingly, the tow-mode may be a general term that includes all measures required for protecting an electric motor of the electric vehicle from being damaged by towing, such as disconnecting at least one or all wheels which rotate while the electric vehicle is being towed from the electric motor. By identifying the need of the tow-mode activation, necessary steps may be taken by the electric vehicle to ensure disconnection of these parts. Accordingly, the method may provide an initial step of identifying a need of a tow-mode activation because the electric vehicle needs to be towed as a next step. After the need is determined, tow-mode may be activated as a further step by the method.

The method may detect a malfunction of at least a part of the electric vehicle. The malfunction may be identified by, for instance, a code. The code may be an error code, also known as diagnostic trouble code (DTC). Accordingly, the detected malfunction may be processed by a computer or shared with other computer networks, for instance for an analysis thereof. Allocation of a DTC to the detected malfunction may be performed by an on-board diagnostic system of the electric vehicle. The malfunction may be obtained by the method as the first data. The first data may be a so-called raw data, without having been processed by the electric vehicle. It may be data indicative of a momentary malfunction, which occurred somehow and somewhere in the electric vehicle. The malfunction identified as the first data may be classified in different categories and/or in different risk levels. For instance, a high-risk level may comprise critical malfunctions, such as a life-threatening malfunctions, requiring substantially immediate fixing. Whereas a low risk level may comprise less critical malfunctions, such as a malfunction which does not particularly affect functioning of the electric vehicle immediately. Further, it may be possible that a specific combination of multiple low-risk level malfunctions may lead to a classification or an upgrade in the high-risk level. In particular, the method may determine only if the high-risk level malfunctions are corresponding to the second data. Accordingly, processing performance may be increased.

The second data may indicate a malfunction requiring tow-mode to be activated. For instance, a malfunction that requires the drivetrain to be disconnected from the at least one wheel to protect the electric motor may be identified as the second data. Other examples may be a malfunction in brake systems, e.g., a decreased braking performance, and/or in propulsion systems, e.g., a dysfunction of an electric motor and/or a battery (pack) of the vehicle, and/or communication malfunctions between electronics and many more. The second data may be pre-defined, e.g., during an initial setting of the vehicle's electronics and/or prestored, e.g., in a storage unit, for instance by a vehicle specification, based on type and/or model of the electric vehicle. The second data may be configured for editing based on the electric vehicle requirements. The second data may be also in a code format, alternatively a DTC, as mentioned previously.

The method may determine whether the first data corresponds to the second data by comparing the first data and the second data. For instance, the first data and the second data may be compared by identifying an overlap or common elements between the two data. More specifically, data points or records that exist in both and those that are unique to each set may be determined. For determining the correspondence, statistical measures such as mean, median, mode, variance, or standard deviation may be calculated for each of the first data and the second data. A threshold, for instance may be pre-defined in a vehicle specification, may be used to determine the correspondence of the first data to the second data. "To correspond" may mean that the first data and the second data are identical. Alternatively, the first data and the second data may be defined to correspond even if they are not identical. For instance, the first data may indicate a failure of a right headlight. The second data may indicate the right headlight or a left headlight. As failure of both headlights may lead to a need for the tow-mode activation, the method may consider the first data and the second data to correspond even if they may be not identical. Additionally, or alternatively, in case the first data comprises multiple datasets and/or the second data comprises multiple datasets, they may be considered corresponding when at least one of the multiple datasets included in the first data corresponds to at least one of the multiple datasets included in the second data. Having determined the correspondence of the first and the second data, the method may provide a signal for activating the tow-mode. In other words, the method may define that the electric vehicle may need to be towed. Accordingly, the signal may indicate the need of activating the tow-mode before starting to tow the vehicle.

The method provides a simple yet secure way of identifying the need of the tow-mode activation in the electric vehicle. The method makes sure that the electric vehicle is always in a correct state when towing, by detecting the need and possibly, activating it automatically. The method eliminates a need for the user's recognition for bringing the vehicle into the tow-mode. In other words, the method rules out or at least minimizes the human-based errors. Furthermore, automating the identification of the need of the tow-mode activation may provide a much faster response and even compensate a failure of a manual activation of the tow-mode, thereby reducing risks of an accident. Accordingly, the method not only improves identification process for activation of the tow-mode, but also increases safety of the user.

In an example, the first data may be indicative of a malfunction of a drivetrain of the electric vehicle. The drivetrain may be defined as various components that work together to transmit power from the electric motor to the wheels. Specifically, the drivetrain may comprise the electric motor, power electronics, a battery pack, brakes, auxiliary systems, and various components that facilitate power transmission from the motor to the wheels. The auxiliary systems may include cooling systems for the electric motor and power electronics to maintain optimal operating temperatures, systems for heating, ventilation, and air conditioning (HVAC), power steering, and/or braking. The components that facilitate power transmission from the electric motor to the wheels may be at least a differential, a drive shaft and/or axle. A malfunction in any of these components of the drivetrain of the electric vehicle may cause a critical and/or risky situation and may require activation of the tow-mode. Accordingly, the method may obtain a first data indicative of a malfunction of at least one of these components. Additionally, or alternatively, malfunction of components other than those of the drivetrain, may indicate a malfunction of the drive system. Accordingly, the malfunctions of other components may also be indicated as the first data.

In an example, the first data and/or the second data may be stored in a storage unit. The storage unit may store the first and/or the second data in a list, in a matrix, and the like. The storage unit may be in the electric vehicle or external, e.g., in a memory, a cloud etc. Storage of the first data in the storage unit may be useful for providing information for repairing the malfunctioned component(s) at a repair shop. Alternatively, the first data may be accessed by a producer of the electric vehicle for their records. On the other hand, the second data stored in the storage unit may be provided to the electric vehicles having similar drive mechanisms. Accordingly, the second data common to various electric vehicles may be easily stored in the storage unit of each electric vehicle. Further, vehicle-specific malfunctions requiring tow-mode activation may be additionally stored in the storage unit and saved as second data as well. Accordingly, saving the first data and/or the second data in the storage unit may provide a simplified data acquisition in the electric vehicle.

In an example, the method may further comprise providing the first data and/or the signal indicative of the need of the tow-mode activation to a user. Accordingly, the user may be informed of the first data indicative of the malfunction, preferably through a user interface. Alternatively, or in addition to the fist data, the method may inform the user of the need of the tow-mode activation, preferably by providing the signal to the user interface. The user interface may be a screen, preferably a touch screen, or a loudspeaker. Of course, any other means for transmitting the first data and/or the signal may be used as a user interface.

In an example, the method may further comprise putting the electric vehicle in a state suitable for being towed, in other words, activating the tow mode, if the first data corresponds to the second data. In this example, the electric vehicle may actively undertake steps to bring the electric vehicle into the tow-mode. Here, the state of the electric vehicle for being suitable for being towed may refer to any steps that disconnect the drivetrain from the wheels. The disconnection may be mechanically or digitally or electronically. For instance, a mechanical disconnection of the differential from the wheels, also known as "neutral state", may put the electric vehicle in a state suitable for being towed. In another case, the power electronics, such as an inverter, may be disconnected from the electric motor electrically. For instance, an electrical connection between the inverter and a power source can be interrupted by using a disconnect switch or a circuit breaker. Accordingly, the method may identify the need of a tow-mode activation, as well as taking the necessary steps to activate the tow-mode. In one example, the tow-mode may be activated before providing the first data and/or the signal indicative of the need of the tow-mode activation to the user. This may be the case when obtaining first data for a high-risk malfunction.

In an example, the method may further comprise activating the tow-mode only when at least one condition for tow-mode activation is fulfilled. For this, a second signal to activate the tow-mode based on the signal indicative of the need of tow-mode activation may be generated. The at least one condition may be determined by checking a speed of the vehicle, a brake pedal position and/or a drive setting. For instance, in case the speed is about zero and/or the brake pedal is at least partially activated (e.g., the brake pedal is in an at least partially pushed position), and/or the drive setting is in free-roll, the condition for tow-mode activation may be fulfilled. With this, the method may ensure that tow-mode is activated only when the electric vehicle is parked, or speed is almost zero. For instance, the speed may be 0-20 km/h, preferably 0-10 km/h, more preferably 0-5 km/h. Alternatively, or additionally, the method may ensure that tow-mode is activated only when the brake pedal is at least partially activated. This may indicate that the vehicle is soon to be stopped by the user. Alternatively, or in addition to the above, the method may ensure that tow-mode is activated only when a particular drive setting is selected, for instance free-roll. The free-roll drive setting may be a setting that allows the vehicle to coast or roll freely without regenerative braking or significant deceleration. It may be a driving mode where the electric motor relies on its momentum to maintain speed with minimal resistance. Accordingly, the method may prevent the activation of the tow-mode when the conditions are not fulfilled. Thereby, additional risks that may be generated by the electric vehicle going into the tow-mode in an unsuitable condition, such as during drive, may be reduced.

In an example, the method may further comprise monitoring of the first data. Herewith, the first data may be obtained by the method for determining whether it corresponds to the second data. The monitoring of the first data of the electric vehicle may be performed constantly or periodically. Period can be for instance, every second, every minute, every 10 minutes, once per hour etc.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a module for identifying a need of a tow-mode activation in an electric vehicle, the tow-mode being a state of the electric vehicle in which the electric vehicle is suitable for being towed. The module comprises an obtaining unit, a determining unit and an outputting unit. The obtaining unit is configured to obtain a first data indicative of a malfunction of the electric vehicle. The determining unit is configured to determine whether the first data corresponds to a second data indicative of a malfunction requiring activation of tow-mode. The outputting unit is configured to provide a signal indicative of the need of the tow-mode activation when the first data corresponds to the second data.

The module for identifying a need of a tow-mode activation in an electric vehicle is able to, particularly automatically; detect a malfunction, particularly without requiring an interaction with the user, e.g., a driver of the vehicle. Further, a risk for wrongly identifying the need of the tow-mode activation may be reduced and/or eliminated by pre-defining at least one malfunction requiring activation of tow-mode. The electric vehicle may be a battery electric vehicle (BEV) or a plug-in hybrid electric vehicle (PHEV) or a fuel cell electric vehicle (FCEV).

The module may comprise interrelated elements, including hardware, software, and any necessary interaction between them. The module may comprise multiple units that collaborate and integrate to accomplish both determining the need, as well as activating the tow-mode. The module may be a microcontroller, or may include a digital integrated circuit such as comparators or programmable logic components. The module may additionally correspond or comprise a Field-Programmable Gate Array (FPGA), and/or an Application-Specific Integrated Circuit (ASIC).

The obtaining unit may be configured to read the first data and/or the second data. The determining unit may be configured to compare the first data to the second data and detect if the first data corresponds to the second data. For instance, the first data and the second data may be compared by identifying an overlap or common elements between the two data, more specifically, data points or records that exist in both and those that are unique to each set may be determined. For determining the correspondence, statistical measures such as mean, median, mode, variance, or standard deviation may be calculated for each of the first data and the second data. A threshold may be pre-defined, for instance in a vehicle specification, to determine the correspondence of the first data to the second data. "To correspond" may mean that the first data and the second data are identical. Alternatively, the first data and the second data may be defined to correspond even if they are not identical. Although the obtaining unit and the determining unit are defined separately, as separate units, they may be formed as one unit having distinct functions, such as obtaining the first data indicative of a malfunction of the electric vehicle, and determining whether the first data corresponds to the second data. Thus, the obtaining unit and the determining unit may be integral.

According to an example, the module may further comprise a storage unit configured to store the first data and/or the second data. Storage of the first data in the storage unit may be useful for providing information for repairing the malfunctioned component(s) at a repair shop. Alternatively, the first data may be accessed by a producer of the electric vehicle for their records. On the other hand, the second data stored in the storage unit may be provided to the electric vehicles having similar drive mechanisms. Accordingly, the second data common to various electric vehicles may be easily stored in the storage unit of each electric vehicle. Further, vehicle-specific malfunctions requiring tow-mode activation may be additionally stored in the storage unit and saved as second data as well. Accordingly, the storage unit may provide a simplified data acquisition by saving the first data and/or the second data therein.

In an example, the storage unit may comprise a first storage unit and a second storage unit being formed separately. The first storage unit may store the first data and may be removed from the electric vehicle, for instance at a repair shop for accessing the therein stored first data. In this case, the second storage unit may remain inside the electric vehicle. Advantageously, the second storage unit may store the second data. The second storage unit may be a generic storage unit and installed in the electric vehicles having similar drive mechanisms. Accordingly, the second data common to various electric vehicles may be easily installed on each electric vehicle but integrating the second storage unit only. Because the first and the second storage units are separate, size of the first and the second storage units may be smaller. Alternatively, the storage unit comprises a first storage unit and a second storage unit being formed integrally, which may simplify the montage/replacement of the first and/or the second storage unit to/from the electric vehicle. Alternatively, or additionally, the first storage unit storing the first data and the second storage unit storing the second data, the first storage unit and the second storage unit being formed separately, may facilitate accessing the first data or second data separately from each other via an external computing device.

According to an example, the module may further comprise a monitoring unit configured to monitor the first data of the electric vehicle and/or to provide the first data indicative of the malfunction to the obtaining unit and/or the determining unit. Alternatively, the monitoring unit may receive the first data by another system, e.g., by an on-board vehicle control unit, or by the malfunctioned component, for instance by receiving a signal, without active monitoring. Thus, the monitoring unit may be integrally formed with the obtaining unit.

According to an example, the monitoring unit may be configured to monitor the first data of the electric vehicle constantly or periodically. Accordingly, by constant monitoring, a malfunction of at least one component of the electric vehicle may be detected automatically and in a fast manner. The monitoring unit may also monitor the first data periodically, in other words, in specific, preferably pre-determined, intervals.

According to an example, the module may be further configured to provide the first data and/or the signal indicative of the need of the tow-mode activation, to a user, e.g., by providing the first data and/or the signal indicative of the need of the tow-mode activation to a user interface. The first data and/or the signal indicative of the need of the tow-mode activation may be provided to the user with or without explanations/interpretations/conclusions. Explanations/interpretations/conclusions may include a measure to take in reaction to the first data indicating the malfunction. The first data and/or the signal may be provided by a visual, audible/acoustic and/or tactual/haptic means. In a case of assigning a risk level to the malfunction, different risk level may correspond to a different communication means or a combination thereof. For instance, a high-risk malfunction may cause an activation of a visual, audio, and/or tactual notification at once. Accordingly, a higher safety in driving the vehicle may be provided to the user.

According to an example, the module may further comprise an activation unit being configured to put the vehicle in tow-mode. Putting the vehicle in the tow-mode, in other words a state suitable for being towed, may comprise slowing down the vehicle or bringing the vehicle to a complete standstill. Another action may be, if possible, deactivating or disconnecting the malfunctioned component and/or any critical component, which may lead to a damage in other components of the vehicle, for instance an electric power control unit or similar. With this, a risk of destroying other connected systems of the vehicle may be prevented. After the vehicle is brought to the tow-mode, the vehicle may not need any user interaction.

In an example, the activation unit may be configured to put the vehicle in tow-mode, only when at least one condition for tow-mode activation is fulfilled. For this, the activation unit may generate a second signal to activate the tow-mode based on the signal indicative of the need of tow-mode activation. The at least one condition may be a speed of the vehicle, a brake pedal position and/or a drive setting, For instance, in case the speed is about zero and/or the brake pedal is at least partially activated (e.g., the brake pedal is in an at least partially pushed position), and/or the drive setting is in free-roll, the condition for tow-mode activation may be fulfilled. Accordingly, the module may ensure that the tow-mode is activated only when the electric vehicle is parked, or speed is almost zero. For instance, the speed may be 0-20 km/h, preferably 0-10 km/h, more preferably 0-5 km/h. Alternatively, or additionally, the module may ensure that tow-mode is activated only when the brake pedal is at least partially activated. This may indicate that the vehicle is soon to be stopped by the user. Alternatively, or in addition to the above, the module may ensure that tow-mode is activated only when a particular drive setting is selected, for instance free-roll. The free-roll state may be initiated by the user, for instance via a human-machine-interface (HMI) or may be initiated by the module. The free-roll drive setting may be a setting that allows the vehicle to coast or roll freely without regenerative braking or significant deceleration. It may be a driving mode where the electric motor relies on its momentum to maintain speed with minimal resistance. Accordingly, the module may prevent the activation of the tow-mode when at least one of these conditions are not fulfilled. Thereby, additional risks that may be generated by the electric vehicle going into the tow-mode in an unsuitable condition, such as during drive, may be reduced. By checking if at least one condition is met, a controlled tow-mode activation may be provided while keeping the vehicle safe.

According to an example, the activation unit may be configured to put the electric vehicle in the tow-mode by deactivating the electric motor and/or by disconnecting the electric motor from a battery of the electric vehicle and/or by disabling regenerative braking. More specifically, the activation unit may deactivate the electric motor via at least one controller, such as an electronic controller unit of the electric motor, for instance, by sending a command to the controller to stop supplying power to the electric motor. As alternative, the electric motor may be disconnected from the battery by providing an electrical switch such as a solid-state relay or a contactor therein. Last but not least, regenerative braking may be deactivated as energy recuperation may cause damage to the electric motor. Specifically, during towing the electric vehicle, the electric motor being excited by the rotating wheels may act as a generator and generate electrical energy, potentially causing voltage spikes or excessive current flow, which can damage the electric motor or its electrical components.

According to a third aspect, there is provided a battery electric vehicle comprising a battery, an electric motor, a drivetrain and a module for identifying a need of a tow-mode activation according to the second aspect.

It should be noted that the above examples may be combined with each other irrespective of the aspect involved. Accordingly, the method may be combined with structural features and, likewise, the module and the battery electric vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Fig. 1: shows a block diagram of an exemplary module for identifying a need of a tow-mode activation in an electric vehicle, according to the present disclosure.
- Fig. 2: shows a flow diagram of an exemplary method for identifying a need of a tow-mode activation in an electric vehicle, according to the present disclosure.

### DETAILED DESCRIPTION

The figures are merely schematic representations and serve only to illustrate examples of the disclosure. Identical or equivalent elements are in principle provided with the same reference signs.

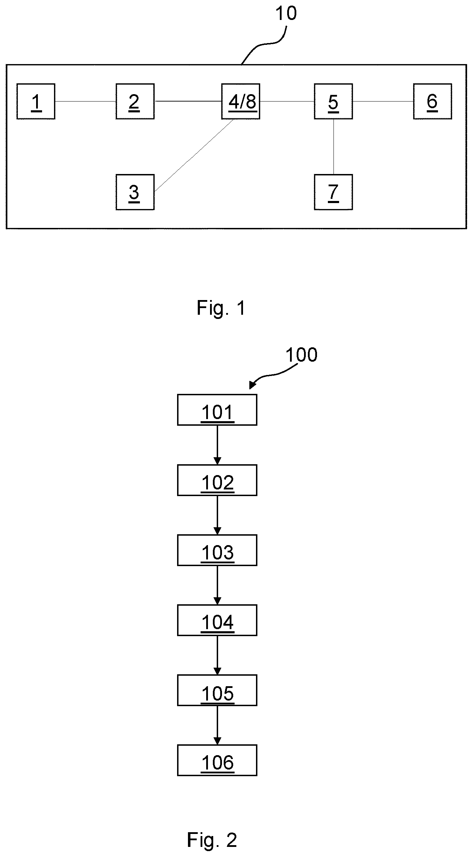

Figure 1 shows schematically a block diagram of an exemplary module 10 for identifying a need of a tow-mode activation in an electric vehicle (not illustrated). The module 10 comprises an obtaining unit 8 to obtain first data indicative of a malfunction of the electric vehicle, a determining unit 4 configured to determine whether the first data corresponds to second data indicative of a malfunction requiring activation of tow-mode, and an outputting unit 5 configured to provide a signal indicative of the need of the tow-mode activation when the first data corresponds to the second data. Here, the obtaining unit 8 and the determining unit 4 are exemplarily integrally formed as one unit.

The module 10 may comprise a storage unit (not illustrated in the figures) configured to store the first data and/or the second data. The storage unit may comprise a first storage unit 2 and a second storage unit 3 being formed separately, although can be also formed integrally.

As illustrated in Figure 1, a monitoring unit 1 may be connected with the obtaining unit 8 and/or the determining unit 4 and may be configured to monitor the first data of the electric vehicle and/or to provide the first data indicative of the malfunction to the obtaining unit 8 and/or the determining unit 4. The monitoring unit 1 may be connected with the obtaining unit 8 and/or the determining unit 4 via the first storage unit 2, and thereby provide the first data to the obtaining unit 8 and/or the determining unit 4 through the first storage unit 2. The second storage unit 3 may be also connected with the obtaining unit 8 and/or the determining unit 4, for the obtaining unit 8 to obtain the second data and/or the determining unit 4 to determine the correspondence of the first data to the second data.

The outputting unit 5 may be connected with a user interface 7 configured to provide the first data and/or the signal indicative of the need of the tow-mode activation, to a user. The outputting unit 5 may be also in communication with a tow-mode-activation unit 6, which is configured to put the vehicle in tow-mode. The tow-mode activation unit 6 may be configured to check whether at least one predetermined condition for activating the tow-mode is fulfilled, and activate the tow-mode only when the at least one predetermined condition is fulfilled.

Figure 2 shows schematically a flow diagram of an exemplary method 100 for identifying a need of a tow-mode activation in an electric vehicle. The method 100 comprises: obtaining a first data indicative of a malfunction of the electric vehicle, see 102, determining whether the first data corresponds to a second data indicative of a malfunction requiring tow-mode activation, see 103, and providing a signal indicative of the need of the tow-mode activation, when the first data corresponds to the second data, see 104. In the shown example, the first data of the electric vehicle can be monitored and/or provided to the obtaining unit 8 and/or the determining unit 4 by the monitoring unit 1, see 101.

Optionally, as exemplarily shown in Figure 2, the method 100 further comprises, providing the first data and/or the signal indicative of the need of the tow-mode activation to a user interface 7, see 105. The method may further comprise activating the tow-mode, if the first data corresponds to the second data, see 106. The steps 105 and 106 may be performed also the other way around, i.e., the method may activate the tow mode first, and provide the first data and/or the signal to the user interface 7 thereafter. This may be preferred when a fast response to the malfunction is required.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

### LIST OF REFERENCE SIGNS

- 10: module
- 1: monitoring unit
- 2: first storage unit
- 3: second storage unit
- 4: determining unit
- 5: outputting unit
- 6: activation unit
- 7: user interface
- 8: obtaining unit

- 100: method

## Claims

1. A method (100) for identifying a need of a tow-mode activation in an electric vehicle, the tow-mode being a state of the electric vehicle in which the electric vehicle is suitable for being towed, the method (100) comprising:
obtaining a first data indicative of a malfunction of the electric vehicle (102),
determining whether the first data corresponds to a second data indicative of a malfunction requiring tow-mode activation (103), and
providing a signal indicative of the need of the tow-mode activation, when the first data corresponds to the second data (104).

2. The method (100) according to claim 1, wherein the first data is indicative of a malfunction of a drivetrain of the electric vehicle.

3. The method (100) according to any of the previous claims, wherein the first data and/or the second data is stored in a storage unit.

4. The method (100) according to any of the previous claims, comprising providing the first data and/or the signal indicative of the need of the tow-mode activation to a user.

5. The method (100) according to any of the previous claims, further comprising activating the tow-mode, if the first data corresponds to the second data (106).

6. The method (100) according to the previous claim, wherein activating the tow-mode is only performed when at least one condition for tow-mode activation is fulfilled, the at least one condition being indicative of the vehicle being ready for the tow-mode.

7. A module (10) for identifying a need of a tow-mode activation in an electric vehicle, the tow-mode being a state of the electric vehicle in which the electric vehicle is suitable for being towed, the module (10) comprising:
an obtaining unit (8) configured to obtain a first data indicative of a malfunction of the electric vehicle,
a determining unit (4) configured to determine whether the first data corresponds to a second data indicative of a malfunction requiring activation of tow-mode, and
an outputting unit (5) configured to provide a signal indicative of the need of the tow-mode activation when the first data corresponds to the second data.

8. The module (10) according to the previous claim, further comprising a storage unit configured to store the first data and/or the second data.

9. The module (10) according to the previous claim, wherein the storage unit comprises a first storage unit (2) and a second storage unit (3) being formed separately or integrally.

10. The module (10) according to the any of the previous claims 7-9, further comprising a monitoring unit (1) configured to monitor the first data of the electric vehicle and/or to provide the first data indicative of the malfunction to the obtaining unit (8).

11. The module (10) according to the previous claim, wherein the monitoring unit (1) is configured to monitor the first data of the electric vehicle constantly or periodically.

12. The module (10) according to any of the previous claims 7-11, further configured to provide the first data and/or the signal indicative of the need of the tow-mode activation, to a user.

13. The module (10) according to any of the previous claims 7-12, further comprising:
an activation unit (6) being configured to put the vehicle in tow-mode, only when at least one condition for tow-mode activation is fulfilled.

14. The module (10) according to the previous claim, wherein the activation unit (6) is configured to put the electric vehicle in tow-mode by deactivating the electric motor and/or by disconnecting the electric motor from a battery of the electric vehicle and/or by disabling regenerative braking.

15. A battery electric vehicle comprising a battery, an electric motor, a drivetrain and a module (10) for identifying a need of a tow-mode activation according to any of the claims 7- 14.

## Amended claims

### Amended claims in accordance with Rule 137(2) EPC.

1. A method (100) for identifying a need of a tow-mode activation in an electric vehicle, the tow-mode being a state of the electric vehicle in which the electric vehicle is suitable for being towed, the method (100) comprising:
obtaining a first data indicative of a malfunction in a drivetrain of the electric vehicle (102),
determining whether the first data corresponds to a second data indicative of a malfunction requiring tow-mode activation (103), and
providing a signal indicative of the need of the tow-mode activation, when the first data corresponds to the second data (104).

2. The method (100) according to claim 1, wherein the first data and/or the second data is stored in a storage unit.

3. The method (100) according to any of the previous claims, comprising providing the first data and/or the signal indicative of the need of the tow-mode activation to a user.

4. The method (100) according to any of the previous claims, further comprising activating the tow-mode, if the first data corresponds to the second data (106).

5. The method (100) according to the previous claim, wherein activating the tow-mode is only performed when at least one condition for tow-mode activation is fulfilled, the at least one condition being indicative of the vehicle being ready for the tow-mode.

6. A module (10) for identifying a need of a tow-mode activation in an electric vehicle, the tow-mode being a state of the electric vehicle in which the electric vehicle is suitable for being towed, the module (10) comprising:
an obtaining unit (8) configured to obtain a first data indicative of a malfunction in a drivetrain of the electric vehicle,
a determining unit (4) configured to determine whether the first data corresponds to a second data indicative of a malfunction requiring activation of tow-mode, and
an outputting unit (5) configured to provide a signal indicative of the need of the tow-mode activation when the first data corresponds to the second data.

7. The module (10) according to the previous claim, further comprising a storage unit configured to store the first data and/or the second data.

8. The module (10) according to the previous claim, wherein the storage unit comprises a first storage unit (2) and a second storage unit (3) being formed separately or integrally.

9. The module (10) according to the any of the previous claims 6-8, further comprising a monitoring unit (1) configured to monitor the first data of the electric vehicle and/or to provide the first data indicative of the malfunction to the obtaining unit (8).

10. The module (10) according to the previous claim, wherein the monitoring unit (1) is configured to monitor the first data of the electric vehicle constantly or periodically.

11. The module (10) according to any of the previous claims 6-10, further configured to provide the first data and/or the signal indicative of the need of the tow-mode activation, to a user.

12. The module (10) according to any of the previous claims 6-11, further comprising:
an activation unit (6) being configured to put the vehicle in tow-mode, only when at least one condition for tow-mode activation is fulfilled.

13. The module (10) according to the previous claim, wherein the activation unit (6) is configured to put the electric vehicle in tow-mode by deactivating the electric motor and/or by disconnecting the electric motor from a battery of the electric vehicle and/or by disabling regenerative braking.

14. A battery electric vehicle comprising a battery, an electric motor, a drivetrain and a module (10) for identifying a need of a tow-mode activation according to any of the claims 6-13.
